(19) Europäisches Patentamt
European Patent Office
Office européen des brevets

(11) EP 3 827 048 B1

(12) EUROPÄISCHE PATENTSCHRIFT

(45) Veröffentlichungstag und Bekanntmachung des Hinweises auf die Patenterteilung:
**01.04.2026 Patentblatt 2026/14**

(21) Anmeldenummer: **19740404.9**

(22) Anmeldetag: **22.07.2019**

(51) Internationale Patentklassifikation (IPC):
***C08L 67/02*** *(2006.01)*

(52) Gemeinsame Patentklassifikation (CPC):
(C-Sets verfügbar)
**C08L 69/00;** C08L 2310/00 (Forts.)

(86) Internationale Anmeldenummer:
**PCT/EP2019/069656**

(87) Internationale Veröffentlichungsnummer:
**WO 2020/020814 (30.01.2020 Gazette 2020/05)**

# (54) POLYMER-BLENDS ENTHALTEND THERMOPLAST UND VERNETZTES REAKTIONSPRODUKT AUS POLYADDITION ODER POLYKONDENSATION

POLYMER BLENDS CONTAINING THERMOPLASTIC AND CROSSLINKED REACTION PRODUCT COMPRISING THE REACTION PRODUCT OF POLYADDITION OR POLYCONDENSATION

MÉLANGES DE POLYMÈRE CONTENANT UN PRODUIT RÉACTIONNEL THERMOPLASTIQUE ET RÉTICULÉ DE LA POLYADDITION OU DE LA POLYCONDENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2018 EP 18185513**

(43) Veröffentlichungstag der Anmeldung:
**02.06.2021 Patentblatt 2021/22**

(73) Patentinhaber: **Covestro Deutschland AG**
**51373 Leverkusen (DE)**

(72) Erfinder:
- **SEIDEL, Andreas**
  **41542 Dormagen (DE)**
- **GIELER, Mandy**
  **53507 Dernau (DE)**

(74) Vertreter: **Levpat**
**c/o Covestro AG**
**Gebäude 4825**
**51365 Leverkusen (DE)**

(56) Entgegenhaltungen:
**EP-A2- 0 096 893**
**EP-B1- 0 434 998**
**US-A- 3 098 056**
**US-A- 5 182 344**
**US-A1- 2002 128 357**
**US-A1- 2005 137 358**
**US-A1- 2007 049 705**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 69/00, C08L 63/00**

## Beschreibung

Die vorliegende Erfindung betrifft ein Polymer-Blend, die Verwendung des Polymer-Blends zur Herstellung von Formkörpern und die Formkörper selbst. Die Erfindung betrifft auch ein Verfahren zur Herstellung des Polymer-Blends.

Polymere sind seit langem bekannt und werden für eine Vielzahl von Anwendungen eingesetzt. Die Entwicklung neuer Polymere ist allerdings im Allgemeinen aufwändig, teuer und langwierig und das Scale-up in den Produktionsmaßstab erfordert oft hohe Investitionen.

Die Anpassung der Eigenschaftsprofile von polymeren Kunststoffen an neue Marktanforderungen erfolgt daher soweit technisch möglich bevorzugt über die Herstellung von Polymermischungen und die Formulierung von entsprechenden Rezepturen. Dabei werden verschiedene Thermoplaste und gegebenenfalls weitere Additive auf geeigneten Aggregaten wie Knetern und Extrudern in der Schmelze vermischt. Dieser Prozessschritt wird auch als Compoundierung bezeichnet. Die erhaltenen Mischungen werden Polymer-Blends genannt. Dieses Vorgehen hat gegenüber der Entwicklung neuer Polymere den Vorteil kürzerer Entwicklungszeiten und geringerer Investitionsintensität, da übliche Mischaggregate im Allgemeinen grundsätzlich zur Herstellung sehr unterschiedlicher Polymermischungen geeignet sind und daher, wenn überhaupt, oft nur geringfügige Veränderungen, beispielsweise an den Dosiersystemen, den Mischelementen oder der Schneckenkonfiguration vorgenommen werden müssen, um neue Produkte realisieren und erfolgreich in den Markt einführen zu können.

In den meisten Fällen werden bei der großtechnischen Herstellung von Polymer-Blends die polymeren Spezies in der Schmelze miteinander vermischt. Es ist dabei zwar möglich, dass die Polymere hierbei über funktionelle Gruppen miteinander reagieren, aber die eigentlichen Kettenaufbaureaktionen sind vor der Herstellung der Polymer-Blends durch Compoundierung zumindest weitestgehend abgeschlossen.

Durch die Auswahl und die Mengenverhältnisse der Bestandteile der Zusammensetzung von Polymer-Blends können die anwendungstechnischen Eigenschaften, wie beispielsweise Mechanik, Rheologie und thermische Beständigkeit der daraus durch Compoundierung hergestellten Formmassen und der aus solchen Zusammensetzungen oder Formmassen hergestellten Formkörper in weiten Bereichen variiert werden.

Allerdings ist zur Erzielung vorteilhafter Eigenschaftsprofile in den meisten Fällen eine gewisse Mischbarkeit oder zumindest Teilverträglichkeit der Blendpartner notwendig, da es ansonsten zu unerwünschter Phasenentmischung und Phasendelamination kommt. Außerdem müssen sich in den meisten Fällen die zu mischenden Polymere bei den thermischen Bedingungen der Compoundierung unter Einwirkung sinnvoll erreichbarer mechanischer Energie aufschmelzen lassen, ohne sich dabei thermisch zu zersetzen und sich unter solchen Bedingungen gleichmäßig und vorzugsweise feinteilig ineinander dispergieren lassen, um die gewünschten Eigenschaftsvorteile realisieren zu können. Dadurch ist die Herstellung von Polymer-Blends in den meisten Fällen auf die Abmischung thermoplastischer Polymere eingeschränkt.

Selbst bei guter Verträglichkeit der Blendpartner findet in der Regel keine Durchmischung auf molekularer Ebene statt. Vielmehr bilden die einzelnen Blendparter in den meisten Fällen eine mehrphasige Morphologie mit mehr oder weniger feinverteilten, räumlich über Grenzflächen getrennten Domänen aus. Auch bei Mischungen zweier transparenter Polymere resultieren daher oft opake Blends, da das Licht an den Phasengrenzflächen solcher mehrphasiger Polymer-Blends in alle Richtungen gestreut wird. Die Realisierung transparenter Polymer-Blends mit gegenüber den reinen Polymeren, aus denen sie hergestellt sind, verbesserten mechanischen und/oder optischen Eigenschaften oder sonstigen Eigenschaftsvorteilen ist damit durch konventionelle Compoundierungsverfahren in der Regel, nur sehr eingeschränkt möglich.

Die Phasengrenzflächen in mehrphasigen Polymer-Blends können ferner zu Schwachpunkten bei mechanischer Belastung werden. Materialversagen, insbesondere auch unter Einfluss von aggressiven Medien, tritt daher häufig entlang dieser Grenzflächen auf.

Duromere oder elastomere Polymere, also hochvernetzte Polymere, welche sich bei höheren Temperaturen zersetzen, bevor sie thermoplastisch werden, sind für die Herstellung von Polymer-Blends bisher nur in speziellen Fällen geeignet. In diesen Fällen ist es notwendig, den Duromeren oder Elastomeren bereits bei der Herstellung dieser Polymere oder zumindest vor der Herstellung des Polymer-Blends durch Compoundierung die gewünschte mikropartikuläre Struktur zu geben. Dieses kann beispielsweise durch Vermahlung oder Emulsions- bzw. Suspensionspolymerisation geschehen. Weiterhin ist es bei der Herstellung von Polymer-Blends enthaltend solche Duromere oder Elastomere oft erforderlich oder zumindest vorteilhaft, die Verträglichkeit zu dem Matrixpolymer durch eine entsprechende Partikelhülle, welche bevorzugt chemisch an das Duromer oder Elastomer gebunden (aufgepfropft) sein sollte, sicherzustellen. Solche Duromere oder Elastomere mit Kern-Schale-Struktur sind beispielsweise über Emulsions- oder Suspensions-Polymerisation zugänglich und werden beispielsweise als Schlagzähmodifikator eingesetzt. Polymer-Blends, in denen das Duromer oder Elastomer die Matrixphase darstellt, sind auf diesem Wege grundsätzlich nicht zugänglich, wodurch das Spektrum der erzielbaren Eigenschaftsprofile stark begrenzt wird. Die Herstellung von Polymeren und Polymer-Blends in einem Reaktivextrusionsverfahren, in denen die monomeren Bestandteile oder oligomeren Vorstufen des Polymers oder eines polymeren Blendpartners in einem Extruder, in der Regel in Anwesenheit eines Katalysators, und im Falle von

Polymer-Blends in Anwesenheit der vorab polymerisierten weiteren Blend-Partner zur Polymerisation gebracht werden, ist ebenfalls im Stand der Technik beschrieben.

WO 200837772 beispielsweise offenbart ein Verfahren zur Herstellung eines Polylactid-Urethan-Copolymers, in dem ein Polylactid mit endständigen Hydroxyl-Gruppen hergestellt wird durch Kontakt mindestens eines Lactid-Monomers mit einem Diol oder einem Diamin in Anwesenheit eines Katalysators und das derart hergestellte, endständig Hydroxyl-Gruppenfunktionalisierte Polylactid mit einer Diisocyanat-Verbindung, ebenfalls in Anwesenheit eines Katalysators, zur Polymerisation gebracht wird, dadurch gekennzeichnet, dass sowohl das Polylactid als auch das Polylactid-Urethan-Copolymer mittels Reaktivextrusion hergestellt werden.

Der Ansatz einer Kettenaufbaureaktion während der Compoundierung von bereits zuvor auf konventionellem Wege aufgebauten Polymeren im Sinne eines Reaktivextrusionsverfahrens wird auch in JP 6034202 B2 und in K. Matsumoto et al, J. Appl. Polym. Sci. (2013) 443-448 beschrieben. Dort wird eine Harz-Zusammensetzung enthaltend Polycarbonat und Polyolefin mit mehrfach allylisch-funktionalisierten Monomeren sowie einem Peroxid als Initiator einer radikalischen Kettenpolymerisation in einem Compoundieraggregat gemischt. Die mehrfach allylisch-funktionalisierten Monomere werden dabei in einem ersten Schritt in Polycarbonat-Pulver absorbiert und dann in einem zweiten Verfahrensschritt während der Compoundierung des so hergestellten Polycarbonat-Monomer-Gemisches mit Polypropylen in der Polycarbonat-Schmelze zu einem vernetzten Polymer auspolymerisiert. Die so erhaltenen Polymer-Blends zeichnen sich durch eine feinteilige und verarbeitungsstabile Phasenmorphologie aus.

Ein Beispiel für die Herstellung eines Polymer-Blends enthaltend ein thermoplastisches Polymer und ein vernetztes Elastomer in einem Reaktivextrusionsverfahren wird in DE 10 2010 052 973 A1 offenbart. Hier wird ein thermoplastisches Elastomer mit erhöhter Temperaturbeständigkeit hergestellt, indem in einem ersten Verfahrensschritt Cyclobutylenterephthalat (CBT) in einem Extruder oder einem Innenmischer erhitzt und dadurch aufgeschmolzen und ein pulverförmiges, bereits ausvulkanisiertes Elastomer in das CBT eingemischt wird und das so erhaltene Gemisch in einem zweiten Verfahrensschritt unter Zusatz eines Katalysators in-situ zu Polybutylenterephthalat polymerisiert wird.

EP 0334186 A2 offenbart verbesserte thermoplastische Polymermischungen enthaltend A) 70-95 Gew.-Teile eines thermoplastischen Polyurethans erhältlich durch Reaktion von a) einem Diisocyanat, b) einem kurzkettigen Kettenverlängerer und c) einer Hydroxylgruppen-haltigen höhermolekularen Verbindung sowie B) 30 bis 5 Gew.-Teile eines thermoplastischen Polyesters. Es wird offenbart, dass der thermoplastische Polyester auch während der Polyurethanbildung auf einer Zweischneckenknetmaschine zudosiert werden kann. Bezüglich dieser Herstellungsmethode wird auch auf DE 2302564 verwiesen. Die thermoplastischen Polymermischungen der EP 0334186 A2 zeichnen sich durch einen verbesserten Weiterreißwiderstand und erhöhte Härte aus und lassen sich gut verarbeiten.

DE 4217509 A1 offenbart Epoxidharzmischungen für Faserverbundstoffe enthaltend eine polyfunktionelle Epoxidverbindung, einen Härter, einen löslichen Thermoplasten oder Kautschuk und feinteiliges Siliciumdioxid. Die Epoxidharzmischung zeichnet sich durch eine für die Faserimprägnierung gut geeignete Viskosität aus.

Aus DE 199 01 419 A1 ist bekannt, thermoplastisch verarbeitbare Blends aus einem thermoplastischen und einem duromeren Polymeren herzustellen, indem die thermoplastische Komponente mit einer nicht ausgehärteten duroplastischen Komponente in einem Compoundierungsverfahren gemischt wird, dadurch gekennzeichnet, dass die duroplastische Komponente während der Herstellung des Polymer-Blends durch Zusatz eines Vernetzers ausgehärtet wird. Weitere Dokumente des Stand der Technik sind US 2002/128357 A1, US 2005/137358 A1 und EP 0 434 998 B1.

Über die im Stand der Technik beschriebenen Verfahren ist die Herstellung von thermoplastisch verarbeitbaren Polymer-Blends mit einem hohen Anteil an duromerem Polymer aber oft nicht möglich. Insbesondere ist in solchen Verfahren nicht die Herstellung von thermoplastisch verarbeitbare Polymer-Blends mit co-kontinuierlicher Phasenstruktur mit stark verzweigten Polymeren als Blendpartner möglich. Ebenso ist es in einem solchen Verfahren auch nicht möglich, thermoplastisch verarbeitbare Polymer-Blends mit duromerem Polymer als Matrix-Komponente herzustellen.

Es ist somit oft nicht oder nicht im gewünschten Umfang möglich, die positiven Eigenschaften von Thermoplasten (beispielsweise gute Verarbeitbarkeit und Rezyklierbarkeit) und Duromeren oder Elastomeren (beispielsweise Chemikalienbeständigkeit, mechanische Eigenschaften und Oberflächenhärte) in vorteilhafter oder sogar synergistischer Weise zu kombinieren.

Es ist weiterhin - selbst durch die beschriebenen Verfahren der Reaktivextrusion - oft nicht oder nicht im gewünschten Umfang möglich, durch Compoundieren eine optimale Verteilung von mehreren Polymeren ineinander, insbesondere eine solche homogene Verteilung mehrerer Polymere ohne störende Phasengrenzflächen, das heißt hohe Transparenz, zu erreichen.

Es war daher wünschenswert, ein Polymer-Blend bereitzustellen, das mindestens einen der hier genannten Nachteile nicht oder in geringerem Umfang aufweist und sich in einem, optional mehrstufigen Compoundierungsverfahren unter Verwendung üblicher Compoundieraggregate herstellen lässt.

Insbesondere war es wünschenswert, ein thermoplastisch verarbeitbares Polymer-Blend mit verbesserten mechanischen Eigenschaften bereitzustellen. Dabei war besonders eine verbesserte Zähigkeit, bevorzugt auch bei tiefen Temperaturen, eine verbesserte Materialbelastbarkeit (z.B. Streckspannung) und/oder eine verbesserte Oberflächenhärte (Kratzfestigkeit) erstrebenswert.

Weiterhin war es wünschenswert, ein Polymer-Blend mit einer verbesserten Balance aus Beständigkeit gegenüber Chemikalieneinfluss und Schmelzefließfähigkeit (thermoplastische Verarbeitbarkeit im Spritzgussverfahren) bereitzustellen.

Weiterhin war es wünschenswert, ein Polymer-Blend mit erhöhter Transmission, bevorzugt ein transparentes Polymer-Blends mit den zuvor beschriebenen Eigenschaftsvorteilen bereitzustellen.

Insbesondere war es wünschenswert, ein Polymer-Blend bereitzustellen, das sich durch verbesserte mechanische Eigenschaften und/oder verbesserte Balance aus Beständigkeit gegenüber Chemikalieneinfluss und Schmelzefließfähigkeit auszeichnet und sich bei erhöhten Temperaturen thermoplastisch zu Formkörpern verarbeiten lässt, ohne dass eine Zersetzung von einer oder mehrerer der Blend-Komponenten in nennenswertem Umfang, das heißt in einer Art und Weise, welche die gewünschten Eigenschaften des Blends in vor dem Hintergrund des jeweiligen Entwicklungsziels inakzeptablen Umfang beeinflusst, eintritt.

Eine weitere Aufgabe bestand in der Bereitstellung von Polymer-Blends und eines Verfahrens zu deren Herstellung, wobei die Polymer-Blends zwei thermoplastische, nicht mischbare Polymere enthalten und dennoch eine fein-disperse und verarbeitungsstabile Phasenmorphologie aufweisen.

Überraschend wurde gefunden, dass ein Polymer-Blend enthaltend

A) Polycarbonate oder eine einphasige Mischung aus Polycarbonaten mit Polyestercarbonaten, Polyestern und/oder Polyamiden, wobei das Polycarbonat ein gewichtsgemitteltes Molekulargewicht Mw (gemessen durch Gelpermeationschromatographie in Methylenchlorid als Lösungsmittel bei 25°C mit Bisphenol A-basiertem Polycarbonat als Standard) von 10.000 bis 50.000 g/mol aufweist,

B) optional mindestens ein weiteres thermoplastisches Polymer verschieden von Komponente A, das mit Komponente A nicht vollständig mischbar ist,

C) 1 bis 200 Gew.-Teile, bezogen auf 100 Gew.-Teile der Komponente A, eines vernetzten Polymers,dadurch gekennzeichnet ,dass die Komponente C in einem Extruder oder Kneter in-situ bei der Schmelzecompoundierung der Komponente A und optionaler weiterer Komponenten in Anwesenheit von

C. 1 einer ersten monomeren oder oligomeren Komponente enthaltend funktionelle Gruppen C. 1.1 und

C.2 einer zweiten monomeren oder oligomeren Komponente enthaltend von

C.1.1 verschiedene funktionelle Gruppen C.2.1, durch Polyaddition in einer Reaktion der funktionellen Gruppen C.1.1 der Komponente C. 1 mit den funktionellen Gruppen C.2.1 der Komponente C.2 gebildet wird,

wobei es sich bei Komponenten C. 1 und C.2 um

difunktionelle oder höherfunktionelle Verbindungen oder um Mischungen aus einer oder mehreren difunktionellen und/oder einer oder mehreren höherfunktionellen Verbindungen handelt, wobei es sich bei der Komponente C. 1 um mindestens ein Epoxid handelt, wobei es sich bei der Komponente C.2 um mindestens eine Carbonsäure handeltund wobei mindestens eine der Komponenten C. 1 und C.2 höherfunktionelle Verbindungen enthält,

das gewünschte Eigenschaftsprofil aufweist.

Das Polymer-Blend kann weiterhin nicht umgesetzte Restmengen der Komponente C.1 und/oder C.2 enthalten.

Das Polymer-Blend kann weiterhin als Komponente D bis zu 50 Gew.-Teile, bezogen auf in Summe 100 Gew.-Teile der Komponenten A, B und C, an Polymeradditiven und/oder Prozesshilfsstoffen enthalten.

In einer bevorzugten Ausführungsform beträgt der Anteil an Komponente C, bezogen auf 100 Gew.-Teile der Komponente A, 5 bis 100 Gew.-Teile, besonders bevorzugt 10 bis 50 Gew.-Teile.

In einer bevorzugten Ausführungsform beträgt der Anteil an Komponente D, bezogen auf in Summe 100 Gew.-Teile der Komponenten A, B und C, 0,001 bis 20 Gew.-Teile, weiter bevorzugt 0,01 bis 10 Gew. Teile, besonders bevorzugt 0,1 bis 7 Gew.-Teile.

In einer speziellen Ausführungsform enthält das Polymer-Blend als Komponente B weiterhin ein zweites thermoplastisches Polymer oder eine einphasige Mischung mehrerer thermoplastischer Polymere, die mit Komponente A nicht vollständig mischbar sind. In bevorzugten Polymer-Blends bilden die Komponenten A und B getrennte Phasen aus.

Dabei beträgt der Anteil der Komponente A 1 bis 99 Gew.-Teile, bezogen auf in Summe 100 Gew.-Teile der Komponenten A und B, der Anteil der Komponente B 99 bis 1 Gew.-Teile, bezogen auf in Summe 100 Gew.-Teile der Komponenten A und B und der Anteil der Komponente C 1 bis 200 Gew.-Teile, bezogen auf 100 Gew.-Teile der Komponente A. Der Anteil der Komponente D beträgt bis zu 50 Gew.-Teile, bezogen auf in Summe 100 Gew.-Teile der Komponente A, B und C.

In dieser speziellen Ausführungsform beträgt der Anteil der Komponente A, bezogen auf in Summe 100 Gew.-Teile der Komponenten A und B, bevorzugt 60 bis 97 Gew.-Teile, weiter bevorzugt 70 bis 95 Gew.-Teile, besonders bevorzugt 75 bis 90 Gew.-Teile.

Alternativ beträgt in dieser speziellen Ausführungsform der Anteil der Komponente A, bezogen auf in Summe 100 Gew.-Teile der Komponenten A und B, bevorzugt 3 bis 40 Gew.-Teile, weiter bevorzugt 5 bis 30 Gew.-Teile, besonders bevorzugt 10 bis 25 Gew.-Teile.

Auch in dieser speziellen Ausführungsform beträgt der Anteil an Komponente C, bezogen auf 100 Gew.-Teile der Komponente A, bevorzugt 5 bis 100 Gew.-Teile, besonders bevorzugt 10 bis 50 Gew.-Teile.

Weiterhin beträgt auch in dieser speziellen Ausführungsform der Anteil an Komponente D, bezogen auf in Summe 100 Gew.-Teile der Komponenten A, B und C, bevorzugt 0,001 bis 20 Gew.-Teile, weiter bevorzugt 0,01 bis 10 Gew. Teile, besonders bevorzugt 0,1 bis 7 Gew.-Teile.

Die zuvor genannten Vorzugsbereiche bezüglich der Gew.-Anteile der Komponenten A, C und D sind dabei in allen Ausführungsformen beliebig untereinander zu kombinieren, wobei sich der Gew.-Anteil der Komponente B in der speziellen Ausführungsform über die Normierung rechnerisch aus dem Gew.-Anteil der Komponente A über die Gleichung

$$\text{Gew.-Anteil an B} = 100\ \text{Gew.-Teile} - \text{Gew.-Anteil an A}$$

ergibt.

Die Polymer-Blends bestehen bevorzugt zu 90 Gew.-%, weiter bevorzugt zu 95 Gew.-% und besonders bevorzugt zu 100 Gew.-% aus den Komponenten A, B, C und D sowie unreagierten Restmengen der Komponente C.1 und/oder C.2.

Eine weitere Ausführungsform der vorliegenden Erfindung ist ein Verfahren zur Herstellung der Polymer-Blends.

Bei diesem Verfahren werden die Komponente A, C.1 und C.2 sowie optional B und D vermischt und in einem Misch- und Compoundierungsaggregat, bevorzugt ausgewählt aus der Gruppe bestehend aus Innenknetern, Extrudern und Doppelwellenextrudern, schmelzcompoundiert und schmelzextrudiert. Die Temperaturbedingungen richten sich nach der ausgewählten Komponente A und, sofern enthalten, auch nach Komponente B. Die Temperatur muss so gewählt werden, dass die Komponenten A und B aufschmelzen und keine Zersetzung eintritt.

Dieser Prozess wird im Rahmen dieser Anmeldung allgemein als Schmelzecompoundieren oder vereinfacht als Compoundieren bezeichnet.

Bevorzugt findet die Schmelzecompoundierung bei Temperaturen von 150°C bis 350°C, weiter bevorzugt bei 180°C bis 320°C, ganz besonders bevorzugt bei 220°C bis 300°C statt.

Die Vermischung der einzelnen Bestandteile der Polymer-Blends kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

In einer besonderen Ausführungsform werden zunächst in einem ersten Verfahrensschritt (i) die Komponenten A und C.1 und/oder A und C.2 physikalisch vorgemischt, bevor in einem zweiten Verfahrensschritt (ii) die restlichen Komponenten zugegeben werden und das Gemisch schmelzecompoundiert wird.

In einer weiteren besonderen Ausführungsform werden zunächst in einem ersten Verfahrensschritt (i) die Komponenten C.1 und C.2 einzeln oder getrennt mit Komponente A (d.h. es kann eine Mischung aus C.1 mit A sowie eine weitere Mischung von C.2 mit A oder eine Mischung von C.1 und C.2 mit A hergestellt werden, bevorzugt wird eine Mischung von C.1 mit A und eine weitere Mischung von C.2 mit A hergestellt) und optional weiteren Komponenten physikalisch vorgemischt, bevor in dem zweiten Verfahrensschritt (ii) der Schmelzecompoundierung die restlichen Komponenten enthaltend einen Katalysator für die Reaktion von C.1 mit C.2 zugegeben werden. In dem Verfahren gemäß dieser Ausführungsform wird im Verfahrensschritt (ii) das thermoplastische Polymer gemäß Komponente C durch Polykondensation oder Polyaddition gebildet und die finale Blendmorphologie ausgebildet.

Der erste Verfahrensschritt wird bevorzugt durch eine Schmelzecompoundierung realisiert. In speziellen Fällen, bei denen sich die Komponente C.1 und/oder C.2 nicht ohne Zersetzung aufschmelzen lässt oder sublimiert oder bei denen die Schmelztemperatur höher als die thermische Belastbarkeit der Komponenten A oder B liegt, kann es sinnvoll oder notwendig sein, ein alternatives physikalisches Mischverfahren im Verfahrensschritt (i) einzusetzen. Beispielsweise kommt in solchen Fällen das Lösen von C.1 und/oder C.2 und A in einem gemeinsamen Lösungsmittel mit anschließendem Entfernen des Lösungsmittels (z.B. durch Sprühtrocknen) und/oder Ausfällen mittels eines komplementären Lösungsmittels in Frage.

## Komponente A

Als Komponente A kommt ein Polycarbonat oder eine einphasige Mischung aus Polycarbonat mit Polyestercarbonat, Polyester und/oder Polyamid, wobei das Polycarbonat ein gewichtsgemitteltes Molekulargewicht Mw (gemessen durch Gelpermeationschromatographie in Methylenchlorid als Lösungsmittel bei 25°C mit Bisphenol A-basiertem Polycarbonat als Standard) von 10.000 bis 50.000 g/mol aufweist zum Einsatz.

Die Polymere gemäß Komponente A sind bevorzugt linear.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

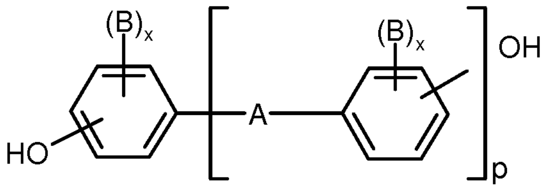

(I),

wobei

A eine Einfachbindung, C1 bis C5-Alkylen, C2 bis C5-Alkyliden, C5 bis C6-Cycloalkyliden, -O-, -SO-, -CO-, -S-, -SO2-, C6 bis C12-Arylen, an das weitere aromatische gegebenenfalls Heteroatome enthaltende Ringe kondensiert sein können,

oder ein Rest der Formel (II) oder (III)

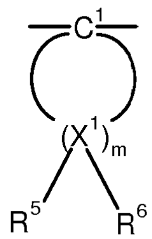

(II)

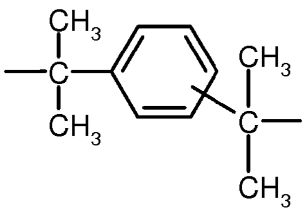

(III)

B jeweils C1 bis C12-Alkyl, vorzugsweise Methyl, Halogen, vorzugsweise Chlor und/oder Brom

x jeweils unabhängig voneinander 0, 1 oder 2,

p 1 oder 0 sind, und

R5 und R6 für jedes X1 individuell wählbar, unabhängig voneinander Wasserstoff oder C1 bis C6-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom X1, R5 und R6 gleichzeitig Alkyl sind.

Bevorzugte Diphenole sind Hydrochinon, Resorcin, Dihydroxydiphenole, Bis-(hydroxyphenyl)-C1-C5-alkane, Bis-(hydroxyphenyl)-C5-C6-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,1,3,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben bevorzugt mittlere Gewichtsmittelmolekulargewichte (Mw, gemessen durch Gelpermeationschromatographie in Methylenchlorid bei 25°C mit Polycarbonat auf Basis von Bisphenol A als Standard) von 10.000 bis 50.000 g/mol, vorzugsweise 15.000 bis 40.000 g/mol, besonders bevorzugt 20.000 bis 35.000 g/mol.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

In Frage kommende Polyester sind in bevorzugter Ausführungsform aromatisch, weiter bevorzugt handelt es sich um Polyalkylenterephthalate.

Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butan-diol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-$\beta$-hydroxyethoxy-phenyl)-propan und 2,2-Bis-(4-hydroxypropoxyphenyl)-propan (DE-A 2 407 674, 2 407 776, 2 715 932).

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat

thalat.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Geeignete Polyamide sind aliphatische Polyamide, zum Beispiel PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-Copolyamid, PA-6/12-Copolyamid, PA-6/11-Copolyamid, PA-6,6/11-Copolyamid, PA-6,6/12-Copolyamid, PA-6/6,10-Copolyamid, PA-6,6/6,10-Copolyamid, PA-4,6/6-Copolyamid, PA-6/6,6/6,10-Terpolyamid, und Copolyamid aus 1,4-Cyclohexandicarbonsäure und 2,2,4- und 2,4,4-Trimethylhexamethylendiamin, aromatische Polyamide, zum Beispiel PA-6,1, PA-6,1/6,6-Copolyamid, PA-6,T, PA-6,T/6-Copolyamid, PA-6,T/6,6-Copolyamid, PA-6,1/6,T-Copolyamid, PA-6,6/6,T/6,1-Copolyamid, PA-6,T/2-MPMDT-Copolyamid (2-MPMDT = 2-Methylpentamethylendiamin), PA-9,T, Copolyamid aus Terephthalsäure, 2,2,4- und 2,4,4-Trimethylhexamethylendiamin, Copolyamid aus Isophthalsäure, Laurinlactam und 3,5-Dimethyl-4,4-diaminodicyclohexylmethan, Copolyamid aus Isophthalsäure, Azelainsäure und/oder Sebacinsäure und 4,4-Diaminodicyclohexylmethan, Copolyamid aus Caprolactam, Isophthalsäure und/oder Terephthalsäure und 4,4-Diaminodicyclohexylmethan, Copolyamid aus Caprolactam, Isophthalsäure und/oder Terephthalsäure und Isophorondiamin, Copolyamid aus Isophthalsäure und/oder Terephthalsäure und/oder weiteren aromatischen oder aliphatischen Dicarbonsäuren, optional alkylsubstituiertem Hexamethylendiamin und alkylsubstituiertem 4,4-Diaminodicyclohexylamin oder deren Copolyamide sowie Mischungen zuvor genannter Polyamide.

Polyamide mit vorteilhaften thermischen Eigenschaften sind Polyamide, welche einen Schmelzpunkt von mindestens 200 °C, bevorzugt von mindestens 220 °C, weiter bevorzugt von mindestens 240 °C und noch weiter bevorzugt von mindesten 260 °C aufweisen. Je höher der Schmelzpunkt der semikristallinen Polyamide, desto vorteilhafter ist das thermische Verhalten der erfindungsmäßen Zusammensetzungen. Der Schmelzpunkt wird mittels DSC ermittelt.

Bevorzugte semi-kristalline Polyamide sind ausgewählt aus der Gruppe, enthaltend PA-6, PA-6,6, PA-6,10, PA-4,6, PA-11, PA-12, PA-12,12, PA-6,1, PA-6,T, PA-6,T/6,6-Copolyamid, PA-6,T/6-Copolyamid, PA-6/6,6-Copolyamid, PA-6,6/6,T/6,1-Copolyamid, PA-6,T/2-MPMDT-Copolyamid, PA-9,T, PA-4,6/6-Copolyamid und deren Mischungen oder Copolyamide.

Weiter bevorzugte semi-kristalline Polyamide sind PA-6,1, PA-6,T, PA-6,6, PA-6,6/6T, PA-6,6/6,T/6,1-Copolyamid, PA-6,T/2-MPMDT-Copolyamid, PA-9,T, PA-4,6 und deren Mischungen oder Copolyamide.

## Komponente B

Als Komponente B kommen grundsätzlich alle Arten von thermoplastischen Polymeren oder einphasige Mischungen aus zwei oder mehr als zwei solchen thermoplastischen Polymeren in Frage, unter der Bedingung, dass die Komponente A und die Komponente B im Polymer-Blend nicht vollständig mischbar sind. Das bedeutet, dass die

Komponenten A und B in den erfindungsgemäßen Polymer-Blends bevorzugt getrennte Phasen ausbilden.

Die Komponente B enthält bevorzugt keine funktionellen Gruppen gemäß C.1.1 und C.2.1.

In einer bevorzugten Ausführungsform weist die Komponente B eine niedrigere Schmelzeviskosität als Komponente A unter den Bedingungen von Druck, Temperatur und Scherrate bei der Herstellung des Polymer-Blends durch Schmelzecompoundierung auf.

Bevorzugt handelt es sich bei der Komponente B um ein Polyolefin, ein Vinyl(co)polymer, eine Mischung verschiedener Polyolefine oder Vinyl(co)polymere oder um eine Mischung von einem oder mehreren Polyolefinen mit einem oder mehreren Vinyl(co)polymeren.

Weiter bevorzugt handelt es sich bei Komponente B um ein Polyolefin, eine einphasige Mischung mehrerer Polyolefine oder eine Mischung mehrerer Polymere enthaltend mindestens ein Polyolefin.

Polyolefine werden durch Kettenpolymerisation, bevorzugt durch radikalische Polymerisation, hergestellt. Als Monomere werden Alkene eingesetzt. Eine alternative Bezeichung für Alkene ist Olefine. Die Monomere können einzeln oder als Mischung verschiedener Monomere polymerisiert werden.

Bevorzugte Monomere sind Ethylen, Propylen, 1-Buten, Isobuten 1-Penten, 1-Hepten, 1-Okten und 4-Methyl-1-Penten.

Die Polyolefine können bis zu 50 Gew.-%, weiter bevorzugt bis zu 30 Gew.-% vinylische Comonomere enthalten, beispielsweise Methylacrylat, Ethylacrylat, Butylacrylat und Methylmethacrylat.

Die Polyolefine sind meist teilkristallin und können linear oder verzweigt sein. Die Herstellung von Polyolfinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

Bei den Vinyl(co)polymeren handelt es sich um (Co)Polymerisate von mindestens einem Monomeren aus der Gruppe der Vinylaromaten, Vinylcyanide (ungesättigte Nitrile) und (Meth)-Acrylsäure-(C1 bis C8)-Alkylester.

Insbesondere geeignete Vinyl(co)polymere sind (Co)Polymerisate aus

B.1 50 bis 99 Gew.-%, bevorzugt 65 bis 85 Gew.-%, besonders bevorzugt 70 bis 80 Gew.-% bezogen auf das (Co) Polymerisat B mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und

B.2 1 bis 50 Gew.-%, bevorzugt 15 bis 35 Gew.-%, besonders bevorzugt 20 bis 30 Gew.-% bezogen auf das (Co) Polymerisat B mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat).

Diese (Co)Polymerisate B sind harzartig, thermoplastisch und kautschukfrei.

Derartige Vinyl(Co)Polymerisate B sind bekannt und lassen sich durch radikalische Polymerisation, insbesondere durch Emulsions-, Suspensions-, Lösungs- oder Massepolymerisation herstellen. Die (Co)Polymerisate B besitzen ein gewichtsgemitteltes Molekulargewicht (Mw), bestimmt per Gelpermeationschromatographie mit GPC in Tetrahydrofuran mit Polystyrol als Standard, von bevorzugt 50000 bis 200000 g/mol, besonders bevorzugt von 70000 bis 150000 g/mol, besonders bevorzugt von 80000 bis 130000 g/mol.

## Komponente C

Die Komponente C ist ein verzweigtes oder vernetztes Polymer enthaltend Struktureinheiten abgeleitet von

C.1 einer ersten monomeren oder oligomeren Komponente enthaltend funktionelle Gruppen C.1.1 und

C.2 einer zweiten monomeren oder oligomeren Komponente enthaltend von C.1.1 verschiedene funktionelle Gruppen C.2.1.

Funktionelle Gruppen im Sinne der vorliegenden Patentanmeldung sind Atomgruppen enthaltend Heteroatome, die das Reaktionsverhalten der sie tragenden Komponenten maßgeblich bestimmen.

Als Komponente C.1 können auch Mischungen von Substanzen eingesetzt werden, wobei sich die Substanzen

im Molekulargewicht und/oder ihrer chemischen Struktur unterscheiden können. Diese Unterschiede beziehen sich dann beispielsweise auf unterschiedlich lange Alkylketten, Verzweigungen in Alkylketten oder entweder aliphatische oder aromatische Kohlenstoffgerüste. In diesen Mischungen weisen die Bestandteile jedoch weiterhin jeweils die gleichen funktionellen Gruppen auf.

Genauso kann die Komponente C.2 auch aus einer Mischung von Substanzen bestehen, die zwar die gleichen funktionellen Gruppen aufweisen, sich aber in ihrem Molekulargewicht und/oder ihrer chemischen Struktur unterscheiden.

Die funktionellen Gruppen sind so ausgewählt, dass eine Reaktion der Gruppen C.1.1 mit den Gruppen C.1.2 stattfinden kann.

Die Reaktion kann durch eine thermische Aktivierung oder durch Zugabe eines Katalysators beschleunigt werden.

Bei den Komponenten C.1 und C.2 handelt es sich um difunktionelle oder höherfunktionelle Verbindungen oder um Mischungen aus einer oder mehreren strukturell verschiedenen difunktionellen und/oder einer oder mehreren strukturell verschiedenen höherfunktionellen Verbindungen, wobei mindestens eine der Komponenten C.1 und C.2 höherfunktionelle Verbindungen enthält. Höherfunktionelle Verbindungen sind solche Verbindungen, die mehr als zwei funktionelle Gruppen pro Molekül aufweisen. Bevorzugt enthalten die höherfunktionellen Verbindungen 3 oder 4 funktionelle Gruppen pro Molekül.

Bevorzugt enthält die Komponente C.1 und/oder die Komponente C.2 mindestens 5 Mol-% höherfunktionelle Verbindungen, bevorzugt 10 bis 40 Mol-%, jeweils bezogen auf die Komponente C.1 beziehungsweise C.2.

Bei den höherfunktionellen Verbindungen aus Komponente C.1 handelt es sich beispielsweise um trifunktionelle Epoxide und bei den höherfunktionellen Verbindungen aus Komponente C.2 handelt es sich beispielsweise um trifunktionelle Carbonsäuren.

Die Komponente C wird gebildet durch Polyaddition in einer Reaktion der funktionellen Gruppen C.1.1 der Komponente C.1 mit den funktionellen Gruppen C.2.1 der Komponente C.2.

Komponenten C.1 sind Epoxide.

Komponenten C.2 sind Carbonsäuren.

Die Reaktion zwischen C.1 und C.2, das heißt zwischen den funktionellen Gruppen C.1.1 und C.2.1, findet statt in einem Extruder oder Kneter in-situ bei der Schmelzecompoundierung in Anwesenheit der Komponente A, optional in Anwesenheit der Komponenten B und D. Dabei werden die bei der Schmelzecompoundierung der Komponente A üblichen Bedingungen hinsichtlich Temperatur, Druck und Verweilzeit im Extruder oder Kneter eingehalten.

Bevorzugt werden in Summe mindestens 40 Gew.-%, weiter bevorzugt mindestens 50 Gew.-%, besonders bevorzugt mindestens 80 Gew.-%, am meisten bevorzugt mindestens 90 Gew.-%, der eingesetzten Komponenten gemäß C.1 und C.2 während der Schmelzecompoundierung zum Polymer gemäß Komponente C umgesetzt.

Die Komponente C.1 und die Komponente C.2 sind bevorzugt mit der Schmelze der Komponente A in den eingesetzten Mengenverhältnissen unter den Bedingungen der Schmelzecompoundierung der Komponente A und optionaler weiterer Komponenten homogen mischbar.

Aufgrund der oben genannten zumindest teilweisen Mehrfunktionalität der Komponente C.1 und/oder C.2 hat die gebildete Komponente C eine verzweigte oder vernetzte Struktur.

Komponente C ist ein vernetztes Epoxidharz.

Zur Herstellung der Epoxidharze als Komponente C kommen in bevorzugter Ausführungsform als Komponente C.1 ein Vertreter oder eine Mischung mehrerer Vertreter ausgewählt aus vorzugsweise aromatischen Di- oder Multi-Glycidylethern zum Einsatz. Bevorzugt sind die Diglycidylether von Diphenolen. Als Diphenole zur Herstellung solcher Diglycidylether geeignet und bevorzugt geeignet sind beispielsweise dieselben Diphenole gemäß Formel (I), die auch bei der Herstellung der Polycarbonate gemäß Komponente A zum Einsatz bzw. bevorzugt zum Einsatz kommen. Besonders bevorzugt kommt Bisphenol A zum Einsatz. Bei der Herstellung von oligomeren oder pre-polymeren Diglycidylethern können diese Diphenole einzeln oder als beliebige Mischungen eingesetzt werden.

Als Komponente C.1 kommen auch solche höherfunktionellen, optional oligomeren oder pre-polymeren Glycidylether mit drei, vier oder mehr als vier Epoxy-Gruppen enthaltend Struktureinheiten abgeleitet von phenolischen Verbindungen mit drei oder vier phenolischen OH-Gruppen in Frage. Diese werden ausgehend von phenolischen Verbindungen mit drei oder vier phenolischen OH-Gruppen hergestellt. Bei der Herstellung von höherfunktionellen oligomeren oder pre-polymeren Glycidylethern können diese phenolischen Verbindungen mit drei oder vier phenolischen OH-Gruppen auch in beliebiger Mischung mit Diphenolen bei der Herstellung der Komponente C.1 zum Einsatz kommen. Bevorzugt ist bei der Herstellung solcher höherfunktionellen oligomeren oder pre-polymeren Glycidylethern der Gehalt an Diphenolen, bezogen auf die Summe aller phenolischen Baueinheiten, aber bei mindestens 50 Mol-%, weiter bevorzugt bei mindestens 80 Mol-%, besonders bevorzugt bei mindestens 90 Mol-%. Am stärksten bevorzugt kommen 100 Mol-% Diphenole, d.h. keine phenolischen Verbindungen mit drei und vier phenolischen Gruppen bei der Herstellung der Komponente C.1 zum Einsatz.

Die Diphenol-Diglycidylether werden durch Reaktion des Diphenols oder der Diphenol-Mischung mit Epichlorhydrin in Anwesenheit von Natriumhydroxid hergestellt. In einer zweistufigen Reaktion wird dabei zunächst Epichlorhydrin an das Diphenol addiert und daraus anschließend mit einer stöchiometrischen Menge Natronlauge das Bis-Epoxid gebildet, welches dann - bei Verwendung eines molaren Überschusses an Diphenol - unter Bildung eines Oligomers oder Pre-Polymers mit weiteren Diphenol-Molekülen reagieren kann. In Abhängigkeit vom eingesetzten Verhältnis von Diphenol und Epichlorhydrin entstehen auf diese Weise Oligomere oder Pre-Polymere mit zwei endständigen Glycidylethergruppen, wobei das Molekulargewicht des derart erhaltenen Oligomers oder Pre-Polymers vom eingesetzten Verhältnis von Diphenol und Epichlorhydrin abhängt. In analoger Art und Weise werden auch die höherfunktionellen Glycidylether enthaltend Struktureinheiten abgeleitet von phenolischen Verbindungen mit drei oder vier phenolischen OH-Gruppen sowie die oligomeren oder pre-polymeren höherfunktionellen Glycidylether enthaltend sowohl Struktureinheiten abgeleitet von Diphenolen wie auch Struktureinheiten abgeleitet von phenolischen Verbindungen mit drei und/oder vier phenolischen OH-Gruppen hergestellt. Als Komponente C.1 geeignet sind sowohl die monomeren, oligomeren und polymeren Glycidylether sowie Mischungen daraus.

Beispielsweise und bevorzugt als Komponente C.1 geeignet sind Bisphenol-A-Diglycidylether (oft auch als BADGE bezeichnet) oder die oligomeren Produkte Epon™ 2002-2005 der Hexion Inc. (Columbus, USA).

Als Komponente C.1 oder als Bestandteil der Komponente C.1 weiterhin geeignet sind Tris(4-hydroxyphenyl)methan-triglycidyl-ether, der Di-, Tri- und/oder Tetra-Glycidylether des 1,1',2,2'-Tetrakis(p-hydroxyphenyl)ethans, Poly- oder Oligo-[(o-cresyl glycidyl ether)-co-formaldehyd, Tris(2,3-epoxypropyl) isocyanurate, Glycerol-triglycidyl-ether sowie Diglycidyl-terephthalat.

In einer alternativen bevorzugten Ausführungsform kommt als Komponente C.1 ein mehrfach Glycidylmethacrylat-modifiziertes, bevorzugt aromatische Struktureinheiten enthaltendes Polymer oder Oligomer, besonders bevorzugt ein Vinylcopolymer oder -oligomer zum Einsatz.

Zur Herstellung der Epoxidharze als Komponente C kommen in bevorzugter Ausführungsform als Komponente C.2 ein Vertreter oder eine Mischung mehrerer Vertreter ausgewählt aus Verbindungen mit zwei, drei, vier und mehr als vier Carboxylgruppen, besonders bevorzugt ein Vertreter oder eine Mischung mehrerer Vertreter ausgewählt aus aromatischen Carboxylsäuren mit zwei, drei, vier und mehr als vier COOH-Gruppen zum Einsatz.

Bevorzugte Beispiele für als Komponente C.2 geeignete aromatische Carboxylsäuren mit zwei, drei oder vier Carboxyl-Gruppen sind Phthalsäure, Terephthalsäure, Isophthalsäure, 1,3,5-Benzoltricarbonsäure, 1,2,4-Benzoltricarbonsäure, 1,3,5-Tris(4-carboxyphenyl)benzol, 1,2,4,5-Tetrakis(4-carboxyphenyl)benzol und Mischungen aus mehreren dieser mehrfach Carboxy-funktionalisierten Verbindungen. Dieses können bevorzugt auch als Mischung mit mehrfunktionellen Phenolen mit zwei, drei, vier und/oder mehr als vier phenolischen OH-Gruppen als Komponente C.2 zum Einsatz kommen. In einer weiter bevorzugten Ausführungsform enthält Komponente C.2 aromatische Carboxylsäuren mit drei und/oder vier Carboxyl-Gruppen und phenolische Verbindungen mit drei, vier und/oder mehr als vier phenolischen Gruppen in einer Konzentration, bezogen auf die Komponente C.2, von mindestens 5 Mol-%, weiter bevorzugt mindestens 10 Mol-%, besonders bevorzugt mindestens 25 Mol-%, ganz besonders bevorzugt mindestens 50 Mol-% aller Bestandteile der Komponente C.2.

In einer besonderen Ausführungsform bildet Komponente C ein polymeres Netzwerk aus, welches in einem Temperaturbereich unterhalb der Zersetzungstemperaturen der Komponenten A und C sowie der optionalen Komponente B intra- und/oder intermolekular dynamisch kovalente Bindungen austauscht. Dadurch wird das Polymer-Blend auch bei einem hohen Vernetzungsgrad und/oder hohem Gehalt der Komponente C thermoplastisch formbar. Der kovalente Bindungsaustausch kann durch geeignete Katalysatoren beschleunigt werden.

## Komponente D

Die Zusammensetzung kann als Komponente D optional weiterhin Polymeradditive und/oder Prozesshilfsstoffe enthalten.

Als Komponente D kommen beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Polyetheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln oder Quarzpulver), IR-Absorbentien, optische Aufheller, fluoreszierende Additive, Füll- und Verstärkungsstoffe (z.B. Talk, gemahlene Glas- oder Karbonfasern, Glas- oder Keramik(hohl)kugeln, Glimmer, Kaolin, $CaCO_3$ und Glasschuppen), Säuren, Katalysatoren (z. B. ausgewählt aus der Gruppe bestehend aus Zinn-Verbindungen, Zink-Verbindungen, Zirkonium-Verbindungen, Samarium-Verbindungen, Phosphoniumsalzen, und Ammoniumsalzen) sowie Farbstoffe und Pigmente (beispielsweise Ruß, Titandioxid oder Eisenoxid), oder aber Mischungen mehrerer der genannten Additive in Frage. In bevorzugter Ausführungsform kommt als Komponente oder Bestandteil der Komponente D ein Katalysator für die Polyadditionsreaktion der Komponenten C.1 und C.2 unter Bildung der Komponente C zum Einsatz. Dieser ist in weiter bevorzugter Ausführungsform ausgewählt aus der Gruppe bestehend aus Zinn-Verbindungen, Zink-Verbindungen, Zirkonium-Verbindungen, Samarium-Verbindungen, Phosphoniumsalzen, und Ammoniumsalzen. Besonders bevorzugt kommen als solche Katalysatoren Vertreter ausgewählt aus der Gruppe bestehend aus Zinn-Verbindungen, Zink-Verbindungen, Zirkonium-Verbindungen und Phosphoniumsalzen zum Einsatz.

In bevorzugter Ausführungsform kommt als Komponente D oder Bestandteil der Komponente D weiterhin ein Katalysator für die Beschleunigung des intra- und/oder intermolekularen dynamischen Bindungsaustausches des Polymers C zum Einsatz. Hierfür geeignete Katalysatoren sind in bevorzugter Ausführungsform ebenfalls ausgewählt aus der Gruppe bestehend aus Zinn-Verbindungen, Zink-Verbindungen, Zirkonium-Verbindungen, Samarium-Verbindungen, Phosphoniumsalzen, und Ammoniumsalzen. Besonders bevorzugt kommen als solche Katalysatoren ebenso Vertreter ausgewählt aus der Gruppe bestehend aus Zinn-Verbindungen, Zink-Verbindungen, Zirkonium-Verbindungen und Phosphoniumsalzen zum Einsatz.

In einer speziellen Ausführungsform kann der Katalysator für die Polyadditionsreaktion der Komponenten C.1 und C.2 unter Bildung der Komponente C sowie der Katalysator für die Beschleunigung des intra- und/oder intermolekularen dynamischen Bindungsaustausches des Polymers C identisch sein.

In bevorzugter Ausführungsform enthalten die erfindungsgemäßen Zusammensetzungen als Komponente D mindestens je eine Komponente ausgewählt aus der Gruppe der Entformungsmittel und Stabilisatoren.

In besonders bevorzugter Ausführungsform kommt als Entformungsmittel Pentaerythrittetrastearat zum Einsatz.

In besonders bevorzugter Ausführungsform kommt als Stabilisator mindestens eine Verbindung ausgewählt aus der Gruppe der sterisch gehinderten Phenole, der organischen Phosphite, der Schwefel-basierten Co-Stabilisatoren und der Brönstedt-sauren Verbindungen zum Einsatz.

In besonders bevorzugter Ausführungsform enthält die Zusammensetzung als Stabilisator mindestens einen Vertreter ausgewählt aus der Gruppe bestehend aus Octadecyl-3-(3,5-di-tert-butyl-4-hydroxyphenyl)propionat und Tris(2,4-di-tert-butylphenyl)phosphit.

Als Komponente D können in bevorzugter Ausführungsform die erfindungsgemäßen Zusammensetzungen auch Flammschutzmittel, beispielsweise halogenierte organische Verbindungen bzw. phosphorhaltige Flammschutzmittel enthalten. Letztgenannte kommen bevorzugt zum Einsatz.

## Herstellung der Formkörper

Die erfindungsgemäßen Polymer-Blends können zur Herstellung von Formkörpern jeder Art verwendet werden. Diese können beispielsweise durch Spritzguss, Extrusion, Heißpressen und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper, die aus den erfindungsgemäßen Polymer-Blends hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Polymer-Blends eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

## Beispiele

### Komponente A

Lineares Polycarbonat auf Basis Bisphenol-A mit einem gewichtsgemittelten Molekulargewicht $M_w$ von 25.000 g/mol (bestimmt durch GPC bei Raumtemperatur in Methylenchlorid als Lösungsmittel gegen einen BPA-PC-Standard).

**Komponente** C.1

Epon™ 2002 (Hexion Inc., Columbus, Ohio, USA):

Epoxy-Harz gemäß der Formel

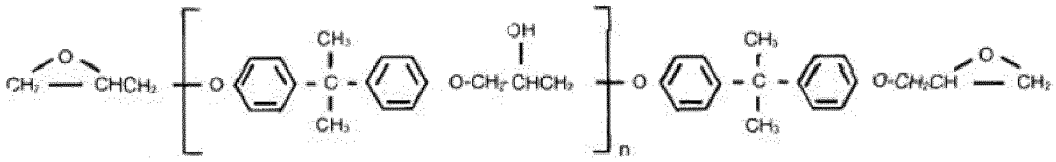

mit n≈4, hergestellt aus Bisphenol-A und Epichlorhydrin. Der Epoxygehalt von Komponente C.1 bestimmt gemäß DIN 1877 (Version aus dem Jahre 2000) beträgt 5,9 Gew.-%.

**Komponente** C.2-1

Trimellitsäure (98%) (abcr GmbH, Karlsruhe, Deutschland)

Der Schmelzpunkt der Trimellitsäure liegt bei etwa 230°C.

**Komponente** C.2-2

Phthalsäure (≥99,5%) (Sigma-Aldrich Chemie GmbH, München, Deutschland)

Der Schmelzpunkt der Phthalsäure liegt bei etwa 190°C.

**Masterbatch 1**

Masterbatch enthaltend 80 Gew.-% der Komponente A und 20 Gew.-% der Komponente C.1.

Der Masterbatch 1 wurde hergestellt durch Schmelzecompoundierung mit einem Zweiwellenextruder ZSK25 der Firma Coperion, Werner & Pfleiderer GmbH (Stuttgart, Deutschland) bei einer Schmelzetemperatur von 270°C. Bei der Herstellung des Masterbatches 1 wurde kein Vakuum angelegt.

Der Epoxy-Gehalt des so hergestellten Masterbatch 1 wurde gemäß DIN 1877 (Version aus dem Jahre 2000) mit 1,1 Gew.-% bestimmt. Dieser Wert entspricht im Rahmen der Bestimmungsgenauigkeit dem rechnerisch erwarteten Wert von 0,2 · 5,9 Gew.-% = 1,18 Gew.-%, d. h. bei der Herstellung des Masterbatch 1 kam es zu keinem nennenswerten Umsatz der Epoxy-Funktionen. Das herstellte Granulat des Masterbatches 1 war vollständig transparent und farblos.

**Masterbatch 2**

Masterbatch enthaltend 99 Gew.-% der Komponente A, 0,2 Gew.-% der Komponente C.2-1 und 0,8 Gew.-% der Komponente C.2-2. Der Masterbatch 2 wurde hergestellt durch Schmelzecompoundierung mit einem Zweiwellenextruder ZSK25 der Firma Coperion, Werner & Pfleiderer GmbH (Stuttgart, Deutschland) bei einer Schmelzetemperatur von 240°C. Bei der Herstellung des Masterbatches 2 wurde kein Vakuum angelegt. Das herstellte Granulat des Masterbatches 2 war vollständig transparent und farblos.

**Herstellung der Polymerblends**

**Erfindungsgemäßes Beispiel 1**

33,3 Gew.-% des Masterbatches 1 und 67,7 Gew.-% des Masterbatches 2 wurden auf einem Zweiwellenlaborextruder vom Typ Process 11 (Thermofisher Scientific GmbH, Karlsruhe, Deutschland) bei einer Schmelzetemperatur

von 260°C schmelzecompoundiert.

Das Verhältnis der Masterbatches 1 und 2 wurde bei der Herstellung dieses erfindungsgemäßen Polymer-Blends so gewählt, dass die molare Menge der über den Masterbatch 1 eingebrachten Epoxy-Funktionen der molaren Menge der über den Masterbatch 2 in Summe über die Phthalsäure und die Trimellitsäure eingebrachten Carboxyl-Funktionen rechnerisch stöchiometrisch entspricht.

Der Epoxy-Gehalt des so hergestellten Compounds wurde gemäß DIN 1877 (Version aus dem Jahre 2000) mit 0,16 Gew.-% bestimmt. Dieser Wert entspricht einem rechnerischen Umsatz der durch Komponente C.1 über den Masterbatch 1 eingebrachten Epoxy-Funktionalitäten von 56%. Das hergestellte Granulat aus der Zusammensetzung gemäß Beispiel 1 war vollständig transparent und farblos.

**Vergleichsbeispiel 2**

Komponente A

**Eigenschaften der Polymer-Blends**

Die Formkörper für die Ermittlung der anwendungstechnischen Eigenschaften wurden bei einer Schmelzetemperatur von 280°C und bei einer Werkzeugtemperatur von 80°C auf einer Spritzgießmaschine vom Typ Arburg 270 E (ARBURG Holding GmbH + Co. KG, Loßburg, Deutschland) hergestellt.

Die Transparenz wurde visuell an Prüfstäben der Abmessung 80 mm x 40 mm x 4 mm beurteilt.

Die Schmelzeviskosität als Maß für die Schmelzefließfähigkeit im Spritzgussprozess wurde gemäß ISO 11443 (Version von 2014) bei einer Temperatur von 300°C und bei einer Scherrate von 1000 $s^{-1}$ am bei 120°C für 16 h im Vakuum vorgetrockneten, aufgeschmolzenen Granulat ermittelt.

Als Maß für die Chemikalienbeständigkeit dient die Spannungsrissbeständigkeit (Environmental Stress Cracking = ESC) in Rapsöl bzw. in Sonnenmilch vom Typ Nivea™ Schutz und Pflege Sonnenmilch LSF 30 (Beiersdorf AG, Hamburg, Deutschland). Bestimmt wurde die Zeit bis zum spannungsrissinduzierten Bruchversagen eines spritzgegossenen Prüfkörpers der Abmessung 80 mm x 40 mm x 4 mm bei Raumtemperatur. Im Falle der Beurteilung der Beständigkeit gegen Rapsöl wurden dabei die Prüfkörper mittels einer Spannschablone mit einer externen Randfaserdehnung von 0,8 % beaufschlagt und vollständig in das Rapsöl eingetaucht. Die Messung erfolgte gemäß DIN EN ISO 22088 (Version von 2006) und wurde nach 3 Tagen (72 h) abgebrochen, sofern in dieser Zeit kein Bruchversagen resultierte (Messwert wird in diesem Fall als >72 h angegeben). Im Falle der Beurteilung der Beständigkeit gegen Sonnenmilch wurden die Prüfkörper mittels einer Spannschablone mit einer externen Randfaserdehnung von 2,4 % beaufschlagt und mit der Sonnenmilch oberflächig deckend beaufschlagt. Die Messung erfolgte ebenfalls gemäß DIN EN ISO 22088 (Version von 2006).

Zugmodul und Streckspannung wurden an Prüfkörpern der Dimension 170 mm x 10 mm x 3 mm gemäß ISO 527 (Version von 1996) bei Raumtemperatur ermittelt.

**Tabelle 1: gemessene** Eigenschaften

| Eigenschaft | Beispiel 1 | Vergleichsbeispiel 2 |
|---|---|---|
| Transparenz | ja | ja |
| Schmelzeviskosität [Pa s] | 91 | 219 |
| ESC (Rapsöl)<br>Zeit bis Bruch bei 0,8 % [h] | >72 | >72 |
| ESC (Sonnencreme)<br>Zeit bis Bruch bei 2,4 % [h] | 1,3 | 1,3 |
| E-Modul [MPa] | 2376 | 2149 |
| Streckspannung [N/mm$^2$] | 70 | 60 |

Die Daten in Tabelle 1 zeigen, dass das erfindungsgemäße Polymer-Blend gemäß Beispiel 1 gegenüber dem reinen Polycarbonat vergleichbaren Molekulargewichts gemäß Vergleichsbeispiel 2 bei gleicher Chemikalienbeständigkeit und optischer Qualität (Transparenz) erheblich verbesserte Schmelzefließfähigkeit (reduzierte Schmelzeviskosität) und verbesserte mechanische Eigenschaften (erhöhten E-Modul als Maß der Materialsteifigkeit und Streckspannung als Maß für die maximale Materialbelastbarkeit) aufweist. Derartige Polymer-Blends eignen sich somit besser insbesondere zur Realisierung dünnwandiger, filigraner Bauteile, die mit reinem Polycarbonat aufgrund dessen mangelhafter Schmelzefließfähigkeit bzw. Steifigkeit oder mechanischen Materialbelastbarkeit nicht oder nur schwierig zu realisieren sind. Weiterhin erlaubt die erhebliche Verbesserung der Schmelzefließfähigkeit bei derartigen Polymer-Blends den Einsatz von höhermolekularem Polycarbonat, wodurch sich Materialien mit gegenüber reinem Polycarbonat verbesserter Chemikalienbeständigkeit bei vergleichbarer oder sogar, je nach Wahl des Polycarbonat-Molekulargewichtes, auch verbesserter Schmelzefließfähigkeit realisieren lassen.

## Patentansprüche

**1.** Polymer-Blend enthaltend

A) Polycarbonate oder eine einphasige Mischung aus Polycarbonaten mit Polyestercarbonaten, Polyestern und/oder Polyamiden,
wobei das Polycarbonat ein gewichtsgemitteltes Molekulargewicht $M_w$ (gemessen durch Gelpermeationschromatographie in Methylenchlorid als Lösungsmittel bei 25°C mit Bisphenol A-basiertem Polycarbonat als Standard) von 10.000 bis 50.000 g/mol aufweist,
B) optional mindestens ein weiteres thermoplastisches Polymer verschieden von Komponente A, das mit Komponente A nicht vollständig mischbar ist,
C) 1 bis 200 Gew.-Teile, bezogen auf 100 Gew.-Teile der Komponente A, eines vernetzten Polymers,

**dadurch gekennzeichnet,**

**dass** die Komponente C in einem Extruder oder Kneter in-situ bei der Schmelzecompoundierung der Komponente A und optionaler weiterer Komponenten in Anwesenheit von

C.1 einer ersten monomeren oder oligomeren Komponente enthaltend funktionelle Gruppen C.1.1 und
C.2 einer zweiten monomeren oder oligomeren Komponente enthaltend von
C.1.1 verschiedene funktionelle Gruppen C.2.1 ,

durch Polyaddition in einer Reaktion der funktionellen Gruppen C.1.1 der Komponente C.1 mit den funktionellen Gruppen C.2.1 der Komponente C.2 gebildet wird,
wobei es sich bei Komponenten C.1 und C.2 um
difunktionelle oder höherfunktionelle Verbindungen oder um Mischungen aus einer oder mehreren difunktionellen und/oder einer oder mehreren höherfunktionellen Verbindungen handelt,
wobei es sich bei der Komponente C.1 um mindestens ein Epoxid handelt,
wobei es sich bei der Komponente C.2 um mindestens eine Carbonsäure handelt
und wobei mindestens eine der Komponenten C.1 und C.2 höherfunktionelle Verbindungen enthält.

**2.** Polymer Blend gemäß Anspruch 1, wobei das Polymer Blend thermoplastisch verarbeitbar ist.

**3.** Polymer-Blend gemäß Anspruch 1 oder 2, wobei die Komponente C.1 und die Komponente C.2 mit der Schmelze der Komponente A in den eingesetzten Mengenverhältnissen bei einer Temperatur von 180°C bis 320°C homogen mischbar sind.

**4.** Polymer-Blend gemäß einem der vorhergehenden Ansprüche enthaltend

1 bis 99 Gew.-Teile der Komponente A, bezogen auf in Summe 100 Gew.-Teile der Komponenten A und B,
99 bis 1 Gew.-Teile der Komponente B, bezogen auf in Summe 100 Gew.-Teile der Komponenten A und B,
1 bis 200 Gew.-Teile, bezogen auf 100 Gew.-Teile der Komponente A, eines Polymers gemäß Komponente C,

wobei Komponente A und Komponente B im Polymer-Blend getrennte Phasen ausbilden.

**5.** Polymer-Blend gemäß einem der vorhergehenden Ansprüche, **dadurch gekennzeichnet, dass** Komponente C ein polymeres Netzwerk ausbildet, welches in einem Temperaturbereich unterhalb der Zersetzungstemperaturen der Komponenten A und C sowie der optionalen Komponente B intra- und/oder intermolekular dynamisch kovalente Bindungen austauscht.

**6.** Polymer-Blend gemäß einem der vorhergehenden Ansprüche enthaltend 10 bis 50 Gew.-Teile der Komponente C

bezogen auf 100 Gew.-Teile der Komponente A.

7. Polymer-Blend gemäß einem der vorhergehenden Ansprüche, **dadurch gekennzeichnet, dass** in Summe mindestens 40 Gew.-% der eingesetzten Komponenten gemäß C.1 und C.2 zum Polymer gemäß Komponente C umgesetzt werden, ermittelt über den Epoxy-Gehalt bestimmt gemäß DIN 1877 in der Version aus dem Jahre 2000.

8. Polymer-Blend gemäß einem der vorhergehenden Ansprüche weiterhin enthaltend als Komponente D 0,001 bis 20 Gew.-Teile, bezogen auf in Summe 100 Gew.-Teile der Komponenten A, B und C, ein oder mehrere Polymeradditive und/oder Prozesshilfsstoffe.

9. Polymer-Blend gemäß Anspruch 8, wobei die Komponente D einen Katalysator für die Polykondensations- oder Polyadditionsreaktion, welche zur Bildung der Komponente C führt, enthält, welcher ausgewählt ist aus mindestens einem Vertreter der Gruppe bestehend aus Zinn-Verbindungen, Zink-Verbindungen, Zirkonium-Verbindungen, Samarium-Verbindungen, Phosphoniumsalzen und Ammoniumsalzen.

10. Polymer-Blend gemäß einem der vorhergehenden Ansprüche, **dadurch gekennzeichnet, dass** Komponente B ein Polyolefin, eine einphasige Mischung mehrerer mischbarer Polyolefine oder eine einphasige Mischung mehrerer Polymere enthaltend mindestens ein Polyolefin ist.

11. Polymer-Blend gemäß einem der vorhergehenden Ansprüche, **dadurch gekennzeichnet, dass** Komponente C ein vernetztes Epoxidharz ist.

12. Verfahren zur Herstellung eines Polymer-Blends gemäß einem der vorherigen Ansprüche, **dadurch gekennzeichnet, dass**

(i) in einem ersten Verfahrensschritt zunächst mindestens eine der Komponenten C.1 und C.2 mit Komponente A physikalisch vorgemischt wird und
(ii) in einem zweiten Verfahrensschritt die im Schritt (i) hergestellte(n) Vormischung(en) unter Zugabe der restlichen Komponenten schmelzecompoundiert werden und das Polymer gemäß Komponente C dabei durch Polyaddition oder Polykondensation gebildet und die finale Blendmorphologie ausgebildet wird.

13. Verfahren gemäß Anspruch 12, **dadurch gekennzeichnet, dass**
im Verfahrensschritt (i) zunächst die Komponenten C.1 und C.2 und optional weitere Komponenten gemeinsam oder getrennt mit Komponente A physikalisch vorgemischt werden und im Verfahrensschritt (ii) zusätzlich als Komponente D ein Katalysator für die Polyaddition- oder Polykondensationsreaktion von C.1 mit C.2 zugegeben wird.

14. Verwendung eines Polymer-Blends gemäß einem der Ansprüche 1 bis 11 zur Herstellung von Formkörpern.

15. Formkörper hergestellt aus einem Polymer-Blend gemäß einem der Ansprüche 1 bis 11.

## Claims

1. Polymer blend containing

A) polycarbonates or a monophasic mixture of polycarbonates with polyester carbonates, polyesters and/or polyamides,
wherein the polycarbonate has a weight-average molecular weight $M_w$ (measured by gel permeation chromatography in methylene chloride as solvent at 25°C with bisphenol Abased polycarbonate as standard) of from 10 000 to 50 000 g/mol,
B) optionally at least one further thermoplastic polymer which is different from component A and is not completely miscible with component A,
C) 1 to 200 parts by weight, based on 100 parts by weight of component A, of a crosslinked polymer,

**characterized**
**in that** component C is formed *in situ* in an extruder or kneader during the melt compounding of component A and optional further components in the presence of

C.1 a first monomeric or oligomeric component containing functional groups C.1.1 and
C.2 a second monomeric or oligomeric component containing functional groups C.2.1 which are different from C.1.1, by polyaddition in a reaction of the functional groups C.1.1 of component C.1 with the functional groups C.2.1 of component C.2,
where components C.1 and C.2 are
difunctional or higher-functionality compounds or are mixtures of one or more difunctional and/or one or more higher-functionality compounds,
where component C.1 is at least one epoxide,
where component C.2 is at least one carboxylic acid, and where at least one of the components C.1 and C.2 contains higher-functionality compounds.

**2.** Polymer blend according to Claim 1, wherein the polymer blend is thermoplastically processible.

**3.** Polymer blend according to Claim 1 or 2, wherein component C.1 and component C.2 are homogeneously miscible with the melt of component A in the quantitative ratios used at a temperature of from 180°C to 320°C.

**4.** Polymer blend according to any of the preceding claims, containing

1 to 99 parts by weight of component A, based on a total of 100 parts by weight of components A and B,
99 to 1 parts by weight of component B, based on a total of 100 parts by weight of components A and B,
1 to 200 parts by weight, based on 100 parts by weight of component A, of a polymer of component C,
wherein component A and component B form separate phases in the polymer blend.

**5.** Polymer blend according to any of the preceding claims, **characterized in that** component C forms a polymeric network which, in a temperature range below the decomposition temperatures of components A and C and also of optional component B, exchanges covalent bonds intramolecularly and/or intermolecularly in a dynamic manner.

**6.** Polymer blend according to any of the preceding claims, containing 10 to 50 parts by weight of component C, based on 100 parts by weight of component A.

**7.** Polymer blend according to any of the preceding claims, **characterized in that** in total at least 40% by weight of the components of C.1 and C.2 used are converted to afford the polymer of component C, determined via the epoxy content according to DIN 1877 in the version dated 2000.

**8.** Polymer blend according to any of the preceding claims, furthermore containing, as component D, 0.001 to 20 parts by weight, based on a total of 100 parts by weight of components A, B and C, of one or more polymer additives and/or processing auxiliaries.

**9.** Polymer blend according to Claim 8, wherein component D contains a catalyst for the polycondensation or polyaddition reaction which leads to the formation of component C, the catalyst being selected from at least one representative of the group consisting of tin compounds, zinc compounds, zirconium compounds, samarium compounds, phosphonium salts and ammonium salts.

**10.** Polymer blend according to any of the preceding claims, **characterized in that** component B is a polyolefin, a monophasic mixture of a plurality of miscible polyolefins or a monophasic mixture of a plurality of polymers containing at least one polyolefin.

**11.** Polymer blend according to any of the preceding claims, **characterized in that** component C is a crosslinked epoxy resin.

**12.** Process for producing a polymer blend according to any of the preceding claims, **characterized in that**

(i) in a first process step first at least one of the components C.1 and C.2 is physically premixed with component A and
(ii) in a second process step the premixture(s) produced in step (i) are melt compounded with addition of the remaining components and the polymer of component C is formed in the process by polyaddition or polycondensation and the final blend morphology is formed.

**13.** Process according to Claim 12, **characterized in that** in process step (i) first the components C.1 and C.2 and optionally further components are physically premixed together or separately with component A and in process step (ii), as component D, a catalyst for the polyaddition or polycondensation reaction of C.1 with C.2 is additionally added.

**14.** Use of a polymer blend according to any of Claims 1 to 11 for the production of shaped bodies.

**15.** Shaped body produced from a polymer blend according to any of Claims 1 to 11.

## Revendications

**1.** Mélange de polymères contenant

A) des polycarbonates ou un mélange monophasique de polycarbonates avec des polyestercarbonates, polyesters et/ou polyamides,
le polycarbonate ayant une masse moléculaire moyenne en poids $M_w$ (mesurée par chromatographie par perméation de gel dans du chlorure de méthylène en tant que solvant à 25 °C avec du polycarbonate à base de bisphénol A comme étalon) de 10 000 à 50 000 g/mole,
B) en option au moins un autre polymère thermoplastique différent du composant A, qui n'est pas totalement miscible au composant A,
C) 1 à 200 parties en poids, par rapport à 100 parties en poids du composant A, d'un polymère réticulé,

**caractérisé en ce que**
le composant C est formé dans une extrudeuse ou un malaxeur in situ lors du compoundage à l'état fondu du composant A et de composants supplémentaires optionnels en présence de

C.1 un premier composant monomère ou oligomère contenant des groupes fonctionnels C.1.1 et
C.2 un deuxième composant monomère ou oligomère contenant des groupes fonctionnels C.2.1 différents de C.1.1,
par polyaddition dans une réaction des groupes fonctionnels C.1.1 du composant C.1 avec les groupes fonctionnels C.2.1 du composant C.2,
dans lequel pour ce qui est des composants C.1 et C.2 il s'agit de
composés difonctionnels ou à plus haute fonctionnalité ou de mélanges d'un ou de plusieurs composés difonctionnels et/ou d'un ou de plusieurs composés à plus haute fonctionnalité,
dans lequel pour ce qui est du composant C.1 il s'agit d'au moins un époxyde,
dans lequel pour ce qui est du composant C.2 il s'agit d'au moins un acide carboxylique,
et dans lequel au moins un des composants C.1 et C.2 contient des composés à haute fonctionnalité.

**2.** Mélange de polymères selon la revendication 1, dans lequel le mélange de polymères est apte à la mise en œuvre thermoplastique.

**3.** Mélange de polymères selon la revendication 1 ou 2, dans lequel le composant C.1 et le composant C.2 sont miscibles de façon homogène à la masse fondue du composant A en les proportions utilisées, à une température de 180 °C à 320 °C.

**4.** Mélange de polymères selon l'une quelconque des revendications précédentes, contenant

1 à 99 parties en poids du composant A, par rapport à au total 100 parties en poids des composants A et B,
99 à 1 parties en poids du composant B, par rapport à au total 100 parties en poids des composants A et B,
1 à 200 parties en poids, par rapport à 100 parties en poids du composant A, d'un polymère selon le composant C,
le composant A et le composant B constituant des phases distinctes dans le mélange de polymères.

**5.** Mélange de polymères selon l'une quelconque des revendications précédentes, **caractérisé en ce que** le composant C constitue un réseau polymère qui échange dynamiquement des liaisons covalentes intra- et/ou intermoléculaires dans une plage de température inférieure aux températures de décomposition des composants A et C ainsi que du composant B optionnel.

**6.** Mélange de polymères selon l'une quelconque des revendications précédentes, contenant 10 à 50 parties en poids

du composant C par rapport à 100 parties en poids du composant A.

7. Mélange de polymères selon l'une quelconque des revendications précédentes, **caractérisé en ce qu'**au total au moins 40 % en poids des composants utilisés selon C.1 et C.2 sont convertis en le polymère selon le composant C, établi à partir de la teneur en époxydes déterminée selon DIN 1877 dans la version de l'année 2000.

8. Mélange de polymères selon l'une quelconque des revendications précédentes, contenant en outre, en tant que composant D, 0,001 à 20 parties en poids, par rapport à au total 100 parties en poids des composants A, B et C, un ou plusieurs additifs pour polymères et/ou adjuvants de processus.

9. Mélange de polymères selon la revendication 8, dans lequel le composant D contient un catalyseur pour la réaction de polycondensation ou polyaddition conduisant à la formation du composant C, qui est choisi parmi au moins un représentant du groupe constitué par les composés d'étain, composés de zinc, composés de zirconium, composés de samarium, sels de phosphonium et sels d'ammonium.

10. Mélange de polymères selon l'une quelconque des revendications précédentes, **caractérisé en ce que** le composant B est une polyoléfine, un mélange monophasique de plusieurs polyoléfines miscibles ou un mélange monophasique de plusieurs polymères comportant au moins une polyoléfine.

11. Mélange de polymères selon l'une quelconque des revendications précédentes, **caractérisé en ce que** le composant C est une résine époxydique réticulée.

12. Procédé pour la production d'un mélange de polymères selon l'une quelconque des revendications précédentes, **caractérisé en ce que**

    (i) dans une première étape du procédé, d'abord au moins l'un des composants C.1 et C.2 est prémélangé physiquement avec le composant A, et
    (ii) dans une deuxième étape du procédé, le(s) prémélange(s) préparé(s) dans l'étape (i) sont soumis à un compoundage à l'état fondu avec addition des composants restants et le polymère selon le composant C est ainsi formé par polyaddition ou polycondensation et la morphologie finale du mélange est constituée.

13. Procédé selon la revendication 12, **caractérisé en ce que**
    dans l'étape (i) du procédé, d'abord les composants C.1 et C.2 et en option des composants supplémentaires sont prémélangés physiquement, ensemble ou séparément, avec le composant A, et dans l'étape (ii) du procédé est ajouté en plus, en tant que composant D, un catalyseur pour la réaction de polyaddition ou polycondensation de C.1 avec C.2.

14. Utilisation d'un mélange de polymères selon l'une quelconque des revendications 1 à 11 pour la production de corps moulés.

15. Corps moulé produit à partir d'un mélange de polymères selon l'une quelconque des revendications 1 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 200837772 A
- JP 6034202 B
- DE 102010052973 A1
- EP 0334186 A2
- DE 2302564
- DE 4217509 A1
- DE 19901419 A1
- US 2002128357 A1
- US 2005137358 A1
- EP 0434998 B1
- DE 1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2407674 A
- DE 2407776 A
- DE 2715932 A

### In der Beschreibung aufgeführte Nicht-Patentliteratur

- **K. MATSUMOTO et al.** *J. Appl. Polym. Sci.*, 2013, 443-448
- **SCHNELL**. Chemistry and Physics of Polycarbonates. Interscience Publishers, 1964
- Kunststoff-Handbuch. Carl-Hanser-Verlag, 1973, vol. VIII, 695